Europäisches Patentamt

European Patent Office

Office européen des brevets

(11) Veröffentlichungsnummer: **0 344 435**
**A2**

## (12) EUROPÄISCHE PATENTANMELDUNG

(21) Anmeldenummer: **89106387.7**

(22) Anmeldetag: **11.04.89**

(51) Int. Cl.⁴: **F16N 7/38 , F16N 29/02**

(30) Priorität: **28.05.88 DE 3818256**

(43) Veröffentlichungstag der Anmeldung:
**06.12.89 Patentblatt 89/49**

(84) Benannte Vertragsstaaten:
**AT BE CH DE ES FR GB GR IT LI LU NL SE**

(71) Anmelder: **BAIER & KÖPPEL GMBH & CO.**
**Präzisionsapparate**
**Beethovenstrasse 14**
**D-8570 Pegnitz(DE)**

(72) Erfinder: **Skarupa, Günter,**
**Pestalozzistrasse 10,**
**D-8570 Pegnitz,(DE)**

(74) Vertreter: **Richter, Bernhard, Dipl.-Ing.**
**Beethovenstrasse 10**
**D-8500 Nürnberg 20(DE)**

(54) **Verfahren zur Einstellung der Schmierzeit einer Schmiermittelpumpe und Einrichtung zur Durchführung des Verfahrens.**

(57) Die Erfindung betrifft zunächst ein Verfahren zur Einstellung der Schmierzeit einer durch einen Motor mit Schwankungen der Umlaufgeschwindigkeit angetriebenen Schmiermittelpumpe innerhalb einer Zykluszeit, die aus der Schmierzeit und einer Pausezeit (Nichtschmierzeit) besteht. Um trotz solcher Schwankungen der Umdrehungsgeschwindigkeit dafür zu sorgen, daß den Schmierstellen die notwendige Menge an Schmiermedium zugeführt, d.h. weder unterschmiert noch überschmiert wird, ist dabei vorgesehen, daß die Schmierzeit in Abhängigkeit von der Zahl der von der Pumpe durchgeführten Umdrehungen eingestellt wird. Ferner betrifft die Erfindung eine Einrichtung zur Durchführung des Verfahrens mit einer Meßvorrichtung (5) zum Erfassen der Zahl der Umdrehungen der Schmiermittelpumpe (2) oder der Antriebswelle des Antriebsmotors, sowie einer zugehörigen Schaltvorrichtung.

*Fig. 1*

## Verfahren zur Einstellung der Schmierzeit einer Schmiermittelpumpe und Einrichtung zur Durchführung des Verfahrens

Die Erfindung betrifft zunächst ein Verfahren zur Einstellung der Schmierzeit einer Schmiermittelpumpe gemäß dem Oberbegriff des Anspruches 1. Hierzu sind Gleichstrommotorantriebe mit einer relativ geringen Umdrehungsgeschwindigkeit von 15 U/min bekannt, wobei die zugehörige Toleranz solcher Motoren ± 3 U/min beträgt. Diese Toleranzen vergrößern sich noch erheblich entsprechend der Belastung seitens der Schmiermittelpumpe. Diese wiederum hängt vom Schmiermitteldruck, von der Anzahl der Schmierstellen und besonders auch von der jeweils vorhandenen Temperatur ab, da die Schmiermedien bei niedrigen Temperaturen wesentlich zäher sind als bei höheren Temperaturen. Bisher wurde die Einstellung der Laufzeit der Pumpe entsprechend der Betriebszeit des jeweiligen Fahrzeuges vorgenommen. Dies berücksichtigt aber nicht die vorgenannten Änderungen der Umdrehungsgeschwindigkeit und die daraus resultierenden Unterschiede in der geförderten Menge an Schmiermedium. Dies bedingt aber die Gefahr entweder eines sogenannten Überschmierens oder Unterschmierens.

Die Aufgabe der Erfindung besteht darin, auch bei Vorhandensein der erläuterten Schwankungen der Umdrehungsgeschwindigkeit der Schmiermittelpumpe dafür zu sorgen, daß den Schmierstellen die notwendige Menge an Schmiermedium zugeführt wird, jedoch weder zuviel geschmiert wird (Überschmieren) noch zu wenig an Schmiermedium die Schmierstellen erreicht (Unterschmierung).

Zur Lösung dieser Aufgabe dienen zunächst die Verfahrensmaßnahmen gemäß Anspruch 1. Die Umdrehungszahlen der Schmiermittelpumpe sind ein direktes Maß für die Menge des von ihr geförderten Schmiermittels. Wird gemäß der Erfindung die Schmierzeit hiernach eingestellt, so sind die erläuterten Gefahren des Überschmierens oder Unterschmierens vermieden.

In Ergänzung der gegebenen Aufgabenstellung besteht ein weiteres Ziel der Erfindung in der Schaffung einer Vorrichtung, die zur Durchführung des erläuterten Verfahrens unter Verwendung einer elektromotorisch angetriebenen Schmiermittelpumpe geeignet ist. Hierzu dienen zunächst die Merkmale des Anspruches 2. Die Meßvorrichtung zählt die von der Schmiermittelpumpe getätigten Umdrehungen, während die Schaltvorrichtung dieses Meßergebnis verarbeitet sowie für entsprechende Zu- und Abschaltung des Antriebsmotors sorgt.

Die Merkmale des Anspruches 3 stellen eine bevorzugte und auch nachträglich an schon vorhandenen Schmiermittelpumpen oder deren Antriebsmotoren anbringbare Meßvorrichtung dar. Anspruch 4 ist eine ebenfalls bevorzugte und bei mit Exzenter arbeitenden Schmiermittelpumpen vorteilhafte Ausführungsform der Erfindung.

Schließlich gibt die Erfindung mit den Merkmalen des Anspruches 5 die Möglichkeit, bei Erreichen bzw. Unterschreiten einer kritischen Mindestdrehzahl/min der Schmiermittelpumpe diese ganz abzuschalten und zugleich eine Störmeldung an die das jeweilige Fahrzeug betreibende Person zu geben.

Weitere Vorteile und Merkmale der Erfindung sind der nachstehenden Beschreibung und der zugehörigen Zeichnung von erfindungsgemäßen Ausführungsmöglichkeiten zu entnehmen. In der Zeichnung zeigt:

Fig. 1: schematisch und in der Seitenansicht eine Schmiermittelpumpe mit Antriebsmotor,

Fig. 2: ein Zeitdiagramm der Erfindung,

Fig. 3: eine Ansicht gemäß der Schnittlinie III-III in Fig. 1 und zwar im vergrößerten Maßstab, wobei aber im Gegensatz zu Fig. 1 der Näherungsschalter 5 an einer anderen Stelle gezeichnet ist,

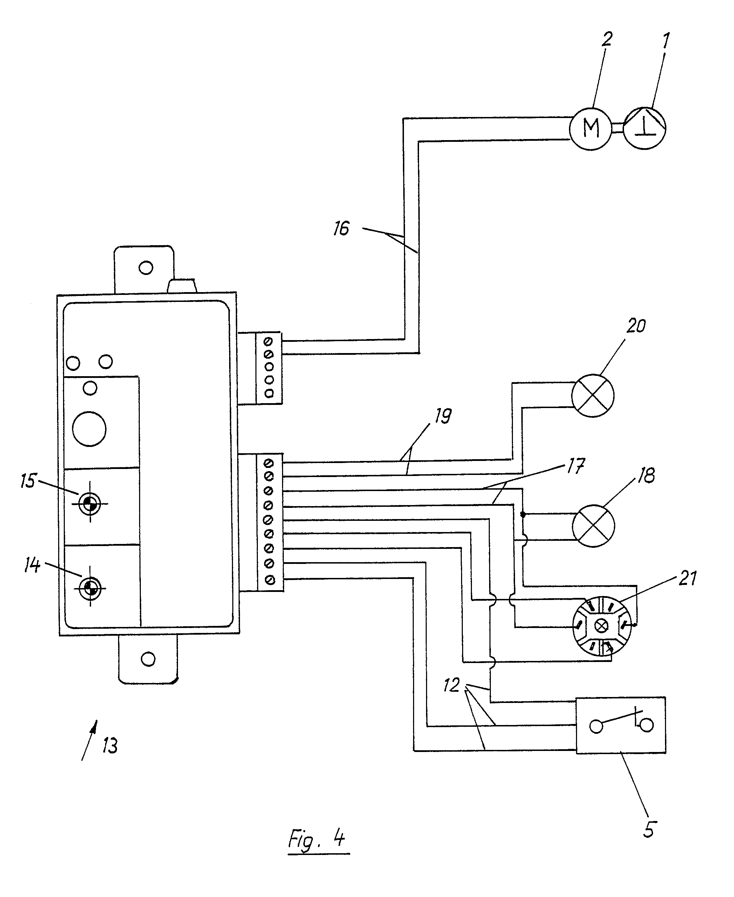

Fig. 4: eine schematische Darstellung der Schaltvorrichtung und zugehörige Bauelemente.

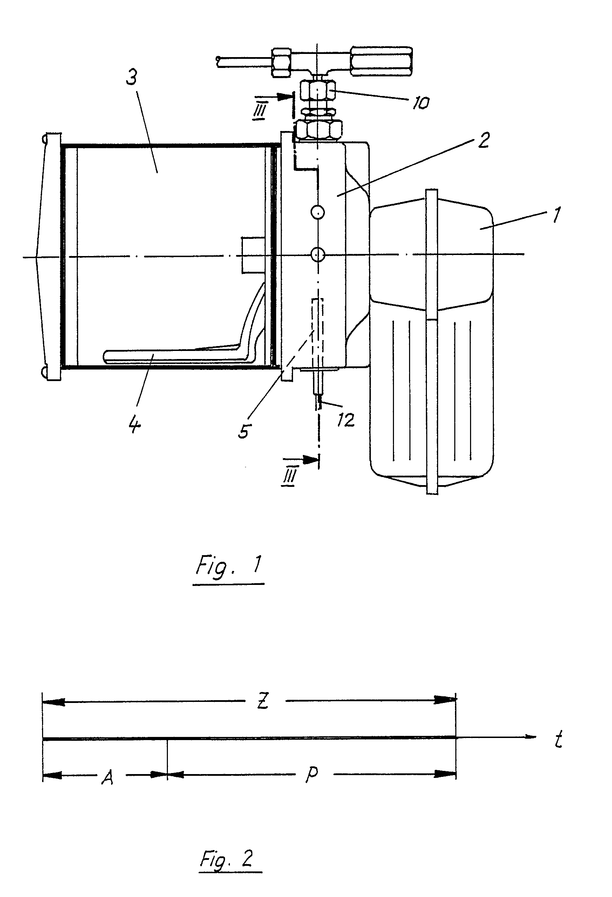

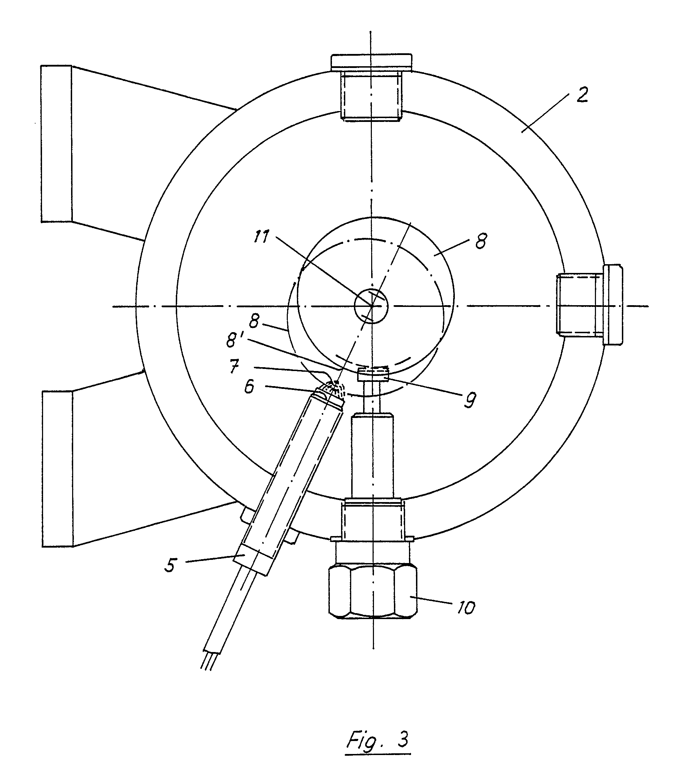

Fig. 1 zeigt einen Antriebsmotor 1 in Form eines niedrigtourigen Gleichstrommotors mit einer Umlaufgeschwindigkeit von z.B. 15 U/min und eine unmittelbar auf die Abtriebswelle des Motors 1 geflanschte oder angebrachte Schmiermittelpumpe 2 mit Schmiermittelbehälter 3 und Rührwerk 4. Die von dem Anker bzw. der Abtriebswelle des Motors 1 oder bevorzugt von der Schmiermittelpumpe 2 selber durchgeführten Umdrehungen werden gezählt, hier mit Hilfe eines Näherungsschalters 5. Dies kann gemäß Fig. 3 in der Weise erfolgen, daß der Näherungsschalter 5 an seinem Kopf 6 ein Magnetfeld 7 bildet, wobei ein mit der Drehzahl der Schmiermittelpumpe umlaufender Teil, hier deren Exzenter 8, pro Umdrehung der Schmiermittelpumpe einmal durch das Magnetfeld 7 hindurchläuft und damit einen Zählimpuls auslöst Dabei ist strichunktiert die Lage des Exzenters 8 beim Durchlaufen des Magnetfeldes 7 und ferner in einer durchgezogenen Linie die demgegenüber um 180° versetzte Drehlage des Exzenters 8 dargestellt, in welcher sein dem Näherungsschalter 5 gegenüberliegender Teil 8' das Magnetfeld 7 nicht durchläuft. Der Exzenter 8 dient im übrigen zur Betätigung eines das Schmiermittel fördernden Kolbens 9. 10 stellt den Druckanschluß zur Weiterleitung des Schmiermittels dar. Die Verwendung eines Näherungsschalters hat unter anderem den Vorteil. daß kein mechanischer Kontakt oder Reibung zwischen ihm und dem umlaufenden Teil der Schmiermittelpumpe erforderlich ist. Vielmehr genügt es, wenn der Teil des Exzenters 8, der von dessen Mittelpunkt 11 den größten Radialabstand hat, einmal pro Pumpenumdrehung das Magnetfeld 7 passiert.

Die Zählimpulse des Näherungsschalters 5 werden über Leitungen 12 der allgemein mit 13 bezeichneten Schalteinrichtung zugeführt An dieser Schalteinrichtung kann bei 14 die sogenannte Zykluszeit und bei 15 diejenige Zahl von Umdrehungen der Schmiermittelpumpe 2 eingestellt werden, nach deren Erreichen der Antriebsmotor 1 abgeschaltet wird. Diese Zusammenhänge sind näher in dem Zeitdiagramm der Fig. 2 gezeigt. Mit Z ist die Zykluszeit eingetragen, die sich aus der Arbeitszeit A der Schmiermittelpumpe 2 und der Pausenzeit, d.h. Stillstandzeit der Schmiermittelpumpe zusammensetzt. Dabei wird gemäß Vorstehendem die Arbeitszeit A an der Schaltvorrichtung 13 eingestellt. Die Arbeitszeit A der Pumpe ergibt sich aus der eingestellten Zahl der Umdrehungen der Pumpe und daraus, welche Zeit der Antriebsmotor benötigt, um die Pumpe so oft zu drehen.

So kann z.B. die Arbeitszeit A zwei bis drei Minuten und die Pausenzeit sieben bis acht Minuten, d.h. die Zykluszeit circa zehn Minuten betragen. Die vorstehenden Zeiten sind aber nur beispielsweise zu verstehen. Wird die Umlaufgeschwindigkeit des Motors 1 und damit der Pumpe 2 kleiner, so hat dies eine Verlängerung der Arbeitszeit A zur Folge, bzw. umgekehrt.

Mittels der Leitungen 16 erfolgt das Zu- und Abschalten des Antriebsmotors 1. Zugleich mit Zuschalten des Motors 1 kann über Leitungen 17 eine Signallampe 18 eingeschaltet werden, die ein Signal dahingehend gibt, daß eine Schmierung stattfindet. Sinkt die Umlaufgeschwindigkeit des Motors und damit der Schmiermittelpumpe unter ein kritisches Maß, so kann der Motor abgeschaltet und über Leitungen 19 eine Signallampe 20 eingeschaltet werden, die "Störung" signalisiert. 21 ist die an sich bekannte Leuchtdrucktaste für eine sogenannte Zwischenschmierung. Ferner ist der Näherungsschalter 5 mit seinen Zuleitungen 12 zur Schaltungsvorrichtung 13 eingezeichnet.

Alle dargestellten und beschriebenen Merkmale, sowie ihre Kombinationen miteinander, sind erfindungswesentlich.

## Ansprüche

1. Verfahren zur Einstellung der Schmierzeit einer durch einen Motor mit Schwankungen der Umlaufgeschwindigkeit, insbesondere einem Gleichstrommotor angetriebenen Schmiermittelpumpe innerhalb einer Zykluszeit, die aus der Schmierzeit und einer Pausezeit (Nichtschmierzeit) besteht, insbesondere für die Zentralschmierung von Nutzfahrzeugen, einschließlich Anhänger, Auflieger, Sonderfahrzeugen und dergleichen mit bevorzugt schwer zu verpressenden Schmiermitteln einer hohen Penetration, dadurch gekennzeichnet, daß die Schmierzeit (A) in Abhängigkeit von der Zahl der von der Pumpe (2) durchgeführten Umdrehungen eingestellt wird.

2. Einrichtung zur Durchführung des Verfahrens nach Anspruch 1, mit einer motorisch, insbesondere von einem Gleichstrommotor angetriebenen Schmiermittelpumpe, gekennzeichnet durch eine Meßvorrichtung (5) zum Erfassen der Zahl der Umdrehungen der Schmiermittelpumpe (2), oder der Antriebswelle bzw. des Antriebsteiles des Antriebsmotors (1) und einer Schaltvorrichtung (13) für das Zu- und Abschalten des Antriebsmotors (1) der Schmiermittelpumpe (2), wobei an der Schaltvorrichtung sowohl die Zykluszeit (Z), bestehend aus Schmierzeit (A) und Pausenzeit (P), als auch die Zahl der Umdrehungen der Schmiermittelpumpe einstellbar ist, nach deren Erreichen innerhalb eines Zyklus die Abschaltung des Antriebsmotors (1) durch die Schaltvorrichtung zu erfolgen hat.

3. Einrichtung nach Anspruch 2, dadurch gekennzeichnet, daß zur Erfassung der Zahl der Umdrehungen der Schmiermittelpumpe, bzw. der zugehörigen Antriebsmittel, ein Näherungsschalter (5) vorgesehen ist, der kopfseitig ein Magnetfeld (7) erzeugt und mit seinem Kopf (6) sich so nahe der Umlaufbahn eines mit der Schmiermittelpumpe (2) oder deren Antriebsmitteln umlaufenden und radial bis in das Magnetfeld (6) hineinragenden Teiles befindet, daß die beim Durchlaufen des Magnetfeldes (7) durch den vorgenannten umlaufenden Teil am Näherungsschalter erzeugten Impulse von diesem an die Schaltvorrichtung (13) weitergegeben werden.

4. Einrichtung nach Anspruch 3, dadurch gekennzeichnet, daß der die Impulse erzeugende umlaufende Teil ein Exzenter (8) der Schmiermittelpumpe (2) ist.

5. Einrichtung nach einem der Ansprüche 2 bis 4, dadurch gekennzeichnet, daß beim Unterschreiten einer Mindestumlaufgeschwindigkeit der Schmiermittelpumpe (2) mit Hilfe der Schaltvorrichtung ein Abschalten des Antriebsmotors (1) folgt, sowie eine Störanzeige(20) zugeschaltet wird.

3

10

2

1

4

5

12

_Fig. 1_

Z

t

A

P

_Fig. 2_

*Fig. 3*

Fig. 4